# EUROPEAN PATENT APPLICATION

(11) **EP 4 822 783 A1**
(43) Date of publication of application: **14.10.2026**
(21) Application number: 26171086.7
(22) Date of filing: 08.04.2026
(51) Int. Cl.: H01M 4/525, C01G 53/506, H01M 4/36

(54) **CATHODE ACTIVE MATERIAL FOR LITHIUM SECONDARY BATTERY, CATHODE FOR LITHIUM SECONDARY BATTERY AND LITHIUM SECONDARY BATTERY INCLUDING THE SAME**

(30) Priority: 08.04.2025 KR 20250045672; 03.04.2026 KR 20260060865
(71) Applicant: SK On Co., Ltd., Seoul 03161 (KR)
(72) Inventor: DO, Ji Yae, 34124 Daejeon (KR); KANG, Min Suk, 34124 Daejeon (KR); KANG, Hyun Sung, 34124 Daejeon (KR); KIM, Seung Hyun, 34124 Daejeon (KR); PARK, Young Uk, 34124 Daejeon (KR); BEAK, Min Cheol, 34124 Daejeon (KR)
(74) Representative: Prüfer & Partner mbB Patentanwälte · Rechtsanwälte

(57) **Abstract**

A cathode active material for a lithium secondary battery according to exemplary embodiments of the present disclosure includes large particles and small particles having a median particle diameter (D₅₀) smaller than that of the large particles. The large particles have an average circularity (C_{L}) of 0.95 or more and less than 1. A ratio (C_{S}/C_{L}) of the average circularity (C_{S}) of the small particles to the average circularity (C_{L}) of the large particles is 0.90 to 0.99. A relative standard deviation of the circularity of the large particles is 1 to 5.

## Description

### [BACKGROUND OF THE INVENTION]

### 1. Field of the Invention

The present disclosure relates to a cathode active material for a lithium secondary battery, a cathode for a lithium secondary battery, and a lithium secondary battery including the cathode.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may include a lithium secondary battery, a nickelcadmium battery, a nickel-hydrogen battery and the like. Among these, the lithium secondary battery has been actively researched and developed due to its high operating voltage, high energy density per unit weight, and advantages in charging speed and weight reduction.

For example, a nickel-cobalt-manganese (NCM)-based active material containing nickel, cobalt, and manganese is used as a cathode active material in the lithium secondary batteries. In addition, as the application scope of lithium secondary batteries expands to large devices such as electric vehicles, the development of cathodes capable of achieving high capacity in lithium secondary batteries is required.

During fabrication of the cathode, pressure is applied to the cathode to increase its density; however, this process may cause the cathode active material particles to break. In this case, the electrochemical characteristics and long-term cycle life characteristics of the lithium secondary battery may be degraded.

Accordingly, design of cathode active material particles for preventing breakage of the cathode active material particles occurring during fabrication of the cathode is required.

### [SUMMARY OF THE INVENTION]

An object of the present disclosure is to provide a cathode active material for a lithium secondary battery having improved electrochemical characteristics and improved cycle life characteristics.

Another object of the present disclosure is to provide a cathode for a lithium secondary battery and a lithium secondary battery including the cathode active material.

A cathode active material for a lithium secondary battery according to exemplary embodiments of the present disclosure includes: large particles; and small particles having a median particle diameter (D₅₀) smaller than that of the large particles, wherein the large particles have an average circularity (C_{L}) of 0.95 or more and less than 1, a ratio (C_{S}/C_{L}) of an average circularity (C_{S}) of the small particles to the average circularity (C_{L}) of the large particles is 0.90 to 0.99, a relative standard deviation of the circularity of the large particles is 1 to 5, and the circularity is defined by Equation 1 below. [Equation 1] $Circularity = 4 π \times \left(A/{P}^{2}\right)$

In Equation 1, A denotes the area of a particle cross-section, and P denotes the length of a perimeter of the particle cross-section.

In exemplary embodiments, the large particles and the small particles may include lithium-nickel metal oxide particles.

In exemplary embodiments, the lithium-nickel metal oxide particles may be represented by Formula 1 below:

[Formula 1] LiₓNiₐM_{b}O_{2+z}

In Formula 1, M is at least one element selected from the group consisting of B, Al, Si, Ti, V, Cr, Mg, Mn, Fe, Co, Cu, Zn, Y, Nb, Zr, Mo, Sn, Sr and W, and 0.9≤x≤1.2, 0.6≤a≤0.99, 0.01≤b≤0.4, and -0.5≤z≤0.1.

In exemplary embodiments, in Formula 1, a may satisfy 0.8≤a≤0.95.

In exemplary embodiments, the large particles may have a median particle diameter (D₅₀) of greater than 10.0 µm and less than 15.0 µm.

In exemplary embodiments, the small particles may have a median particle diameter (D₅₀) of greater than 1.0 µm and less than 8.0 µm.

In exemplary embodiments, the large particles may have an average circularity (C_{L}) of 0.97 or more and less than 1.

In exemplary embodiments, the large particles may have an average circularity (C_{L}) of 0.99 or more and less than 1.

In exemplary embodiments, the ratio (C_{S}/C_{L}) of the average circularity (C_{S}) of the small particles to the average circularity (C_{L}) of the large particles may be 0.92 to 0.97.

In exemplary embodiments, the ratio (C_{S}/C_{L}) of the average circularity (C_{S}) of the small particles to the average circularity (C_{L}) of the large particles may be 0.93 to 0.96.

In exemplary embodiments, the relative standard deviation of the circularity of the large particles may be 1 to 4.

In exemplary embodiments, the relative standard deviation of the circularity of the large particles may be 1 to 3.

In exemplary embodiments, a weight ratio of the large particles to the small particles may be 6:4 to 9:1.

A cathode for a lithium secondary battery according to exemplary embodiments of the present disclosure includes: a cathode current collector; and a cathode active material layer formed on the cathode current collector and including the above-described cathode active material for a lithium secondary battery.

A lithium secondary battery according to exemplary embodiments of the present disclosure includes: the above-described cathode; an anode disposed opposite the cathode; and a separator interposed between the cathode and the anode.

The cathode active material according to the exemplary embodiments of the present disclosure may reduce breakage of cathode active material particles occurring during pressing of the cathode by controlling the average value of circularity and the relative standard deviation of circularity within a predetermined range.

According to the exemplary embodiments, the long-term cycle life characteristics of the lithium secondary battery may be improved by controlling the ratio of the circularity of small particles to the circularity of large particles of the cathode active material within a predetermined range.

The lithium secondary battery according to the exemplary embodiments may be widely applied in green technology fields including electric vehicles, battery charging stations, and renewable energy systems using batteries, such as solar power generation and wind power generation. For example, the lithium secondary battery may be used in eco-friendly electric vehicles and hybrid vehicles to suppress air pollution and greenhouse gas emissions, thereby contributing to mitigating climate change.

### [BRIEF DESCRIPTION OF THE DRAWINGS]

The above and other objects, features and advantages of the present disclosure will be more clearly understood from the following detailed description taken in conjunction with the accompanying drawings, in which:

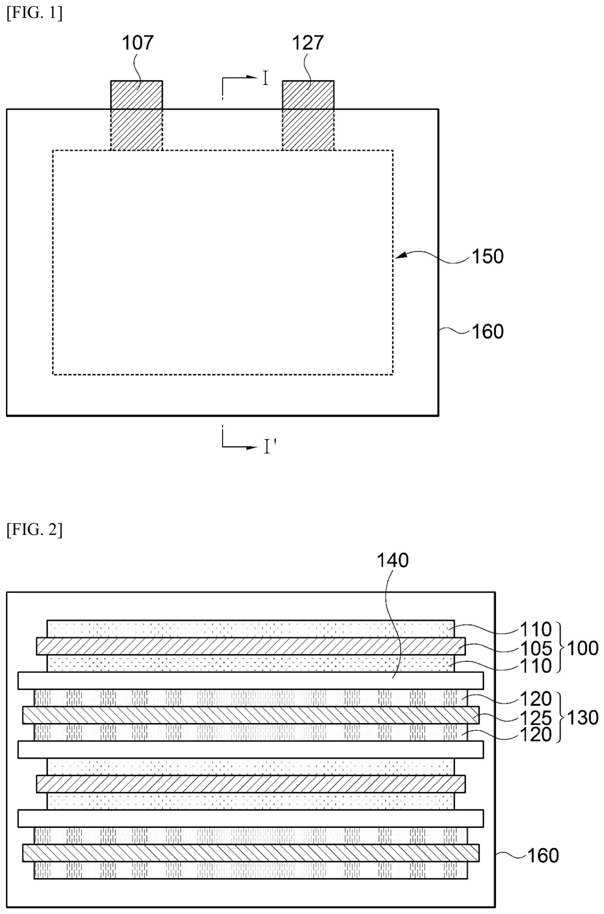

FIGS. 1 and 2 are a schematic plan view and a schematic cross-sectional view, respectively, illustrating a lithium secondary battery according to exemplary embodiments.

### [DETAILED DESCRIPTION OF THE INVENTION]

According to exemplary embodiments of the present disclosure, there is provided a cathode active material in which the average value of circularity and the relative standard deviation of circularity are controlled within a predetermined range. In addition, there is provided a lithium secondary battery including the cathode active material and having improved cycle life characteristics.

The exemplary embodiments will now be described in more detail with reference to the accompanying drawings. However, the drawings and embodiments included in the present specification are merely intended to facilitate understanding of the technical idea of the present disclosure. Accordingly, the present disclosure should not be construed as being limited to the matters described in the drawings and the embodiments.

The term "small particle" as used herein may refer to a cathode active material having a median particle diameter (D₅₀) greater than 1.0 µm and less than 8.0 µm.

The term "large particle" as used herein may refer to a cathode active material having a median particle diameter (D₅₀) greater than 10.0 µm and less than 15.0 µm.

The term "median particle diameter (D₅₀)" as used herein may refer to the maximum particle diameter at a 50% volume fraction in the cumulative particle size distribution. The particle size of the cathode active material may be measured using a scanning electron microscope (SEM), transmission electron microscope (TEM), light scattering method, or laser diffraction method. For example, the particle size distribution of the cathode active material may be measured using a laser diffraction particle size analyzer after dispersing the cathode active material in a dispersion medium.

The cathode active material according to exemplary embodiments may include large particles and small particles.

As the cathode active material according to exemplary embodiments includes large particles and small particles having different particle sizes, more particles may be packed in a predetermined space. For example, the small particles may be uniformly dispersed and distributed between the large particles. In this case, damage to the cathode active material particles due to excessive pressure or compression may be prevented, and a high packing density may be achieved. Accordingly, the energy density per unit volume of the electrode may be increased.

According to exemplary embodiments, the large particles may have an average circularity (C_{L}) of 0.95 or more and less than 1.

According to exemplary embodiments, the average circularity (C_{L}) of the large particles may be 0.96 or more, 0.97 or more, 0.98 or more, or 0.99 or more. According to exemplary embodiments, the average circularity (C_{L}) of the large particles may be less than 1.

Within the above range, the cathode active material for a lithium secondary battery may have a high overall circularity, and structural stability may be improved. For example, if the average circularity (C_{L}) of the large particles is less than 0.95, the strength of the particles may be reduced, thereby causing breakage or damage to the particles during high-voltage operation and charge/discharge processes. For example, if the average circularity (C_{L}) of the large particles is 1, the packing properties of the cathode active material may be high, but production efficiency may decrease, for example, due to an increase in production time of particles satisfying the corresponding circularity and a decrease in yield.

The average circularity (C_{L}) of the large particles may be calculated by measuring the circularity of the large particles and then calculating an average value. For example, it may be calculated by using Morphologi equipment to measure the circularity of particles corresponding to the large particles among 10,000 cathode active material particles, and then calculating an average value.

For example, the large particles may have a spherical shape. A perfect sphere has a circularity value of 1, and as the circularity value of the particles approaches 1, the shape of the particles becomes closer to a perfect sphere.

In exemplary embodiments, the circularity of the particles may be calculated as the square of a ratio of the circumference of a circle having the same area as the particle to the circumference of the particle. For example, the circularity of the particles may be calculated by Equation 1 below. [Equation 1] $Circularity = 4 π \times \left(A/{P}^{2}\right)$

In Equation 1, A may denote the area of a particle cross-section, and P may denote the length of a perimeter of the particle cross-section.

The area of the particle cross-section and the length of the perimeter of the particle cross-section may be measured by observing the active material particles with an optical microscope and using image analysis software such as Image J on the obtained image. Alternatively, the circularity of the particles may be measured by a flow particle image analyzer, for example, Morphologi 4 manufactured by Malvern.

In exemplary embodiments, an average circularity (C_{S}) of the small particles in the cathode active material may be smaller than the average circularity (C_{L}) of the large particles.

As the average circularity (C_{L}) of the large particles is greater than the average circularity (C_{S}) of the small particles, a contact area between the cathode active material particles increases and an electron conduction path becomes shorter, thereby improving the conductivity of the cathode. In addition, lithium ions may be more easily diffused, thereby increasing the charge/discharge rate and improving the output characteristics of the secondary battery.

The average circularity (C_{S}) of the small particles may be calculated by measuring the circularity of the small particles and then calculating an average value. For example, it may be calculated by measuring the circularity of particles corresponding to the small particles among 10,000 cathode active material particles using Morphologi equipment, and then calculating an average value.

For example, the small particles may have a spherical shape.

For example, the small particles may have an average circularity (C_{S}) of greater than 0.855 and less than 0.99.

In exemplary embodiments, a ratio (C_{S}/C_{L}) of the average circularity (C_{S}) of the small particles to the average circularity (C_{L}) of the large particles may be 0.90 to 0.99, 0.91 to 0.98, 0.92 to 0.97, or 0.93 to 0.96.

For example, if the ratio (C_{S}/C_{L}) of the average circularity (C_{S}) of the small particles to the average circularity (C_{L}) of the large particles is less than 0.90, the circularity of the small particles becomes relatively smaller, and thus the intensity of stress occurring between the particles may increase, thereby causing breakage or damage to the particles during high-voltage operation or charge/discharge of the secondary battery. For example, if the ratio (C_{S}/C_{L}) of the average circularity of the small particles (C_{S}) to the average circularity of the large particles (C_{L}) exceeds 0.99, the circularity of the large particles and the small particles is similar, but the circularity of the large particles becomes relatively smaller. Accordingly, surface stress upon contact between the large particles increases, which may lead to breakage and damage to the particles. Within the above range, the conductivity, ion diffusivity, and energy density of the cathode may be improved while preventing breakage of the cathode active material particles.

In exemplary embodiments, the relative standard deviation (%RSD) of the circularity of the large particles may be 1 to 5, 1 to 4, 1 to 3, or 1 to 2.

The relative standard deviation refers to a value obtained by dividing the standard deviation of the circularity by the average circularity, and then multiplying the result by 100.

Within the above range, the energy density of the lithium secondary battery may be improved overall, and thermal stability and cycle life characteristics may be improved. For example, if the relative standard deviation of the large particles is less than 1, the uniformity of particle shape may be very high, but the production efficiency of the large particles satisfying the corresponding range may decrease.

For example, if the relative standard deviation of the large particles exceeds 5, the uniformity of the particle shape is reduced, which may result in inferior long-term performance at room temperature and at high temperature, and may lead to a decrease in charge/discharge efficiency and discharge capacity, thereby reducing the energy density.

In exemplary embodiments, a weight ratio of the large particles to the small particles may be 6:4 to 9:1, 7:3 to 85:15, or 75:25 to 8:2. Within this range, the secondary battery may have a high energy density while exhibiting improved thermal stability and conductivity.

The large particles according to exemplary embodiments may have a median particle diameter (D₅₀) of greater than 10.0 µm and less than 15.0 µm, and for example, may be 10.5 µm to 14.0 µm, or 11 µm to 13.5 µm.

The median particle diameter (D₅₀) of the small particles according to exemplary embodiments may be greater than 1.0 µm and less than 8.0 µm, and for example, may be 2.0 µm to 6.5 µm, 3.0 µm to 5.0 µm, or 3.5 µm to 4.5 µm.

The cathode active material according to exemplary embodiments may include a material capable of reversibly intercalating and deintercalating lithium ions.

According to exemplary embodiments, the cathode active material may include lithium-nickel metal oxide particles. The lithium-nickel metal oxide particles may further include at least one of cobalt (Co), manganese (Mn), and aluminum (Al).

In some embodiments, the cathode active material or the lithium-nickel metal oxide particles may include a layered structure or a crystal structure represented by Formula 1 below.

[Formula 1] LiₓNiₐM_{b}O_{2+z}

In Formula 1, x, a, b and z may satisfy 0.9≤x≤1.2, 0.6≤a≤0.99, 0.01≤b≤0.4, and - 0.5≤z≤0.1. In one embodiment, in Formula 1, a may satisfy 0.8≤a≤0.95.

In Formula 1, M may be at least one element selected from the group consisting of B, Al, Si, Ti, V, Cr, Mg, Mn, Fe, Co, Cu, Zn, Y, Nb, Zr, Mo, Sn, Sr and W. For example, in Formula 1, M may be at least one element selected from the group consisting of B, Al, Si, Ti, Cr, Mg, Y, Nb, Zr, Mo, Sr and W.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element that contributes to the capacity/output activity of the cathode active material together with Co or Mn, such as Al.

For example, the cathode active material or the lithium-nickel metal oxide particles may include a layered structure or a crystal structure represented by Formula 1-1 below.

[Formula 1-1] LiₓNiₐM1_{b1}M2_{b2}O_{2+z}

In Formula 1-1, M1 may be at least one element selected from the group consisting of B, Al, Si, Ti, V, Cr, Mn, Fe, Co, Cu, Zn, Y, Zr, Mo, Sn, Sr and W. M2 may include the above-described auxiliary elements, and x, a, b1, b2 and z may satisfy 0.9≤x≤1.2, 0.6≤a≤0.99, 0.01≤b1+b2≤0.4, and -0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating elements or the doping elements.

The coating element or the doping element may be present on the surface of lithium-nickel metal oxide particles, or may penetrate through the surface of the lithium-nickel metal oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide having an increased content of nickel may be used.

Nickel (Ni) may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the Ni content increases, the long-term storage stability and cycle life stability of the cathode or the secondary battery may be relatively reduced, and side reactions with the electrolyte may also increase. Nevertheless, according to exemplary embodiments, by including Co, the cycle life stability and capacity retention characteristics may be improved by Mn, while electrical conductivity is maintained.

The content of Ni (e.g., the mole fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 2 below.

[Formula 2] p[Li₂MnO₃]·(1-p)[Li_{q}JO₂]

In Formula 2, p and q may satisfy 0<p<1, and 0.9≤q≤1.2, and J may include at least one element selected from Mn, Ni, Co, Fe, Cr, V, Cu, Zn, Ti, Al, Mg and B.

Hereinafter, a method for preparing a cathode active material according to the embodiments of the present disclosure described above will be described.

According to exemplary embodiments, active material metal sources may be prepared. The active material metal sources may include a nickel source, and may further include a manganese source and/or a cobalt source.

Examples of the nickel source may include nickel sulfate (NiSO₄), nickel hydroxide (Ni(OH)₂), nickel nitrate (Ni(NO₃)₂), nickel acetate (Ni(CH₃CO₂)₂), and hydrates thereof. Examples of the manganese source may include manganese sulfate (MnSO₄), manganese hydroxide (Mn(OH)₂), manganese nitrate (Mn(NO₃)₂), manganese acetate (Mn(CH₃CO₂)₂), and hydrates thereof. Examples of the cobalt source may include cobalt sulfate (CoSO₄), cobalt hydroxide (Co(OH)₂), cobalt nitrate (Co(NO₃)₂), cobalt carbonate (CoCO₃), and hydrates thereof.

In one embodiment, nickel sulfate, manganese sulfate, and cobalt sulfate may be used as the nickel source, the manganese source, and the cobalt source, respectively.

According to exemplary embodiments, the above-described active material sources may be mixed and reacted, for example, by a co-precipitation method, to obtain an active material precursor. For example, the active material precursor may be prepared in the form of nickel-manganese hydroxide or nickel-manganese-cobalt hydroxide.

To promote the co-precipitation reaction, a precipitant and/or a chelating agent may be used. The precipitant may include an alkaline compound, such as sodium hydroxide (NaOH) or sodium carbonate (Na₂CO₃). The chelating agent may include, for example, ammonium hydroxide or ammonium carbonate.

Lithium-transition metal oxide particles may be prepared by mixing the active material precursor with a source of the above-described auxiliary elements and a lithium source, and reacting them through heat treatment. For example, the heat treatment temperature may be about 600 °C to 850 °C.

The lithium source may include, for example, lithium carbonate (Li₂CO₃), lithium nitrate (LiNO₃), lithium acetate (CH₃COOLi), lithium oxide (Li₂O), lithium hydroxide (LiOH) and the like. These may be used alone or in combination of two or more thereof. In one embodiment, lithium hydroxide may be used as the lithium source.

The auxiliary element source may include a compound including at least one of B, Al, Y, Fe and Cr. For example, an oxide or hydroxide of at least one of B, Al, Y, Fe and Cr may be used as the auxiliary element source. Boric acid may be used as a boron source.

According to some embodiments, impurities such as LiOH and Li₂CO₃ may remain on the surface of the lithium-transition metal oxide particles. The impurities may be removed by washing with an aqueous solvent or an organic solvent.

Hereinafter, a lithium secondary battery including the cathode active material according to the embodiments of the present disclosure described above will be described.

FIGS. 1 and 2 are a schematic plan view and a schematic cross-sectional view, respectively, illustrating the lithium secondary battery according to exemplary embodiments. FIG. 2 is a cross-sectional view taken along line I-I' of FIG. 1 in a thickness direction.

Referring to FIGS. 1 and 2, the lithium secondary battery may include an electrode assembly including a cathode 100, an anode 130 disposed opposite the cathode 100, and a separator 140 interposed between the cathode and the anode. The electrode assembly may be accommodated in a case 160 together with an electrolyte to be impregnated.

The cathode 100 may include a cathode active material layer 110 formed by applying the above-described cathode active material to a cathode current collector 105.

For example, the cathode current collector 105 may include stainless steel, nickel, aluminum, titanium, or an alloy thereof. The cathode current collector may also include aluminum or stainless steel having a surface treated with carbon, nickel, titanium or silver. For example, the cathode current collector 105 may have a thickness of 10 µm to 50 µm.

For example, a cathode slurry may be prepared by mixing the cathode active material in a solvent. The cathode slurry may be coated onto the cathode current collector 105, followed by drying and roll-pressing, to prepare the cathode active material layer 110. The coating process may be performed using methods such as gravure coating, slot die coating, simultaneous multilayer die coating, imprinting, doctor blade coating, dip coating, bar coating, casting or the like. The cathode slurry may further include a binder and a conductive material.

Non-limiting examples of the solvent used in the preparation of the cathode slurry may include N-methyl-2-pyrrolidone (NMP), dimethylformamide, dimethylacetamide, N,N-dimethylaminopropylamine, ethylene oxide, tetrahydrofuran or the like.

The binder may include polyvinylidene fluoride (PVDF), poly(vinylidene fluoride-co-hexafluoropropylene), polyacrylonitrile, polymethyl methacrylate, acrylonitrile butadiene rubber (NBR), polybutadiene rubber (BR), styrene-butadiene rubber (SBR), a polyacrylic acid-based binder, a poly(3,4-ethylenedioxythiophene) (PEDOT)-based binder and the like. In some embodiments, a PVDF-based binder may be used as the cathode binder.

The conductive material may be added to enhance the conductivity and/or the mobility of lithium ions or electrons. For example, non-limiting examples of the conductive material may include carbon-based conductive materials such as graphite, carbon black, acetylene black, Ketjen black, graphene, carbon nanotubes (CNTs), vapor-grown carbon fibers (VGCF), and carbon fibers; and/or metal-based conductive materials such as tin, tin oxide, and titanium oxide; as well as perovskite materials such as LaSrCoO₃, and LaSrMnO₃.

The anode 130 may include an anode current collector 125 and an anode active material layer 120 including an anode active material and formed on at least one surface of the anode current collector 125.

Non-limiting examples of the anode current collector 125 may include copper foil, nickel foil, stainless steel foil, titanium foil, nickel foam, copper foam, or a polymer substrate coated with a conductive metal. The anode current collector 125 may have, for example, a thickness of 10 µm to 50 µm.

As the anode active material, any material known in the related art, so long as it can absorb and desorb lithium ions, may be used without particular limitation thereof. For example, carbon-based materials such as crystalline carbon, amorphous carbon, carbon composite, carbon fibers, etc., a lithium metal, a lithium alloy, a silicon-containing material, or a tin-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like

The lithium metal may include pure lithium metal or lithium metal having a protective layer formed thereon for suppressing dendrite growth, etc. In one embodiment, a lithium metal-containing layer deposited or coated onto the anode current collector may be used as the anode active material layer. In one embodiment, a lithium thin-film layer may be used as the anode active material layer.

Elements contained in the lithium alloy may include aluminum, zinc, bismuth, cadmium, antimony, silicon, lead, tin, gallium or indium, etc.

The silicon-containing material may provide further increased capacity characteristics. The silicon-containing material may include Si, SiOx (0<x<2), a metal-doped SiOx (0<x<2), a silicon-carbon composite, etc. The metal may include lithium and/or magnesium, and the metal-doped SiOx (0<x<2) may include a metal silicate.

In some embodiments, an anode slurry may be prepared by mixing and stirring the anode active material with a binder, a conductive material and/or a dispersant in a solvent. The anode slurry may be coated onto at least one surface of the anode current collector, and then dried and roll-pressed to prepare the anode 130.

As the binder and conductive material, materials substantially the same as or similar to the binder and conductive material included in the cathode may be used. In some embodiments, as the anode binder, a styrene-butadiene rubber (SBR)-based binder, carboxymethyl cellulose (CMC), polyacrylic acid-based binder, poly(3,4-ethylenedioxythiophene) (PEDOT)-based binder, and the like may be used.

The separator 140 may include a porous polymer film or a porous nonwoven fabric. The porous polymer film may include a polyolefin-based polymer such as an ethylene polymer, a propylene polymer, an ethylene/butene copolymer, an ethylene/hexene copolymer, an ethylene/methacrylate copolymer and the like. The porous nonwoven fabric may include glass fibers having a high melting point, polyethylene terephthalate fibers and the like. The separator 140 may also include a ceramic-based material. For example, inorganic particles may be coated onto the polymer film or dispersed within the polymer film to improve heat resistance.

According to exemplary embodiments, an electrode cell may be defined by the cathode 100, the anode 130 and the separator 140, and a plurality of electrode cells may be stacked to form, for example, a jelly roll type electrode assembly 150. For example, the electrode assembly 150 may be a winding type, a stacking type, a z-folding type, or a stacked-folding type.

The electrode assembly 150 may be accommodated in the case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the like may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, γ-butyrolactone, propylene sulfite, tetrahydrofuran, and the like may be used. These compounds may be used alone or in combination of two or more thereof.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode and the anode in place of the above-described separator.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

As shown in FIG. 1, electrode tabs (cathode tabs and anode tabs) may protrude from each cathode current collector 105 and each anode current collector 125, respectively, which belong to each electrode cell, and may extend to one end portion of the case 160. The electrode tabs may be welded together with the one end portion of the case 160 to be connected with electrode leads (a cathode lead 107 and an anode lead 127) that extend or are exposed to the outside of the case 160.

In FIG. 1, the cathode lead 107 and the anode lead 127 are shown to protrude from an upper side of the case 160 in a planar direction, but positions of these electrode leads are not limited thereto. For example, the electrode leads may protrude from at least one of both sides of the case 160, or may protrude from a lower side of the case 160. Alternatively, the cathode lead 107 and the anode lead 127 may be formed to protrude from different sides of the case 160, respectively.

The lithium secondary battery may be manufactured, for example, in a cylindrical, prismatic, pouch, or coin type using a can.

The invention relates also to the following numbered aspects:
Aspect 1. A cathode active material for a lithium secondary battery comprising: large particles; and
   small particles having a median particle diameter (D₅₀) smaller than that of the large particles,
   wherein the large particles have an average circularity (C_{L}) of 0.95 or more and less than 1,
   a ratio (C_{S}/C_{L}) of an average circularity (C_{S}) of the small particles to the average circularity (C_{L}) of the large particles is 0.90 to 0.99,
   a relative standard deviation of the circularity of the large particles is 1 to 5, and
   the circularity is defined by Equation 1 below:

      $Circularity = 4 π \times \left(A/{P}^{2}\right)$ Equation 1]
   (in Equation 1, A denotes the area of a particle cross-section, and P denotes the length of a perimeter of the particle cross-section).
Aspect 2. The cathode active material for a lithium secondary battery according to aspect 1, wherein the large particles and the small particles comprise lithium-nickel metal oxide particles.
Aspect 3. The cathode active material for a lithium secondary battery according to aspect 2, wherein the lithium-nickel metal oxide particles are represented by Formula 1 below:

   [Formula 1] LiₓNiₐM_{b}O_{2+z}

   (in Formula 1, M is at least one element selected from the group consisting of B, Al, Si, Ti, V, Cr, Mg, Mn, Fe, Co, Cu, Zn, Y, Nb, Zr, Mo, Sn, Sr and W, and 0.9≤x≤1.2, 0.6≤a≤0.99, 0.01≤b≤0.4, and -0.5≤z≤0.1).
Aspect 4. The cathode active material for a lithium secondary battery according to aspect 3, wherein in Formula 1, a satisfies 0.8≤a≤0.95.
Aspect 5. The cathode active material for a lithium secondary battery according to any one of aspects 1 to 4, wherein the large particles have a median particle diameter (D₅₀) of greater than 10.0 µm and less than 15.0 µm.
Aspect 6. The cathode active material for a lithium secondary battery according to any one of aspects 1 to 5, wherein the small particles have a median particle diameter (D₅₀) of greater than 1.0 µm and less than 8.0 µm.
Aspect 7. The cathode active material for a lithium secondary battery according to any one of aspects 1 to 6, wherein the large particles have an average circularity (C_{L}) of 0.97 or more and less than 1.
Aspect 8. The cathode active material for a lithium secondary battery according to any one of aspects 1 to 7, wherein the large particles have an average circularity (C_{L}) of 0.99 or more and less than 1.
Aspect 9. The cathode active material for a lithium secondary battery according to any one of aspects 1 to 8, wherein the ratio (C_{S}/C_{L}) of the average circularity (C_{S}) of the small particles to the average circularity (C_{L}) of the large particles is 0.92 to 0.97.
Aspect 10. The cathode active material for a lithium secondary battery according to any one of aspects 1 to 9, wherein the ratio (C_{S}/C_{L}) of the average circularity (C_{S}) of the small particles to the average circularity (C_{L}) of the large particles is 0.93 to 0.96.
Aspect 11. The cathode active material for a lithium secondary battery according to any one of aspects 1 to 10, wherein the relative standard deviation of the circularity of the large particles is 1 to 4.
Aspect 12. The cathode active material for a lithium secondary battery according to any one of aspects 1 to 11, wherein the relative standard deviation of the circularity of the large particles is 1 to 3.
Aspect 13. The cathode active material for a lithium secondary battery according to any one of aspects 1 to 12, wherein a weight ratio of the large particles to the small particles is 6:4 to 9:1.
Aspect 14. A cathode for a lithium secondary battery comprising:
   a cathode current collector; and
   a cathode active material layer formed on the cathode current collector and comprising the cathode active material for a lithium secondary battery of any one of aspects 1 to 13.
Aspect 15. A lithium secondary battery comprising:
   the cathode for a lithium secondary battery of aspect 14;
   an anode disposed opposite the cathode; and
   a separator interposed between the cathode and the anode.

### Examples and Comparative Examples

### (1) Preparation of Cathode Active Material

### Example 1

### 1) Preparation of Large Particles

NiSO₄, CoSO₄, and MnSO₄ were mixed in a molar ratios of 87 : 9 : 4 using distilled water from which internal dissolved oxygen had been removed by bubbling N₂ for 24 hours. The mixed solution was introduced into a reactor at 50 °C, and a co-precipitation reaction was performed for 48 hours using NaOH and NH₃·H₂O as a precipitating agent and a chelating agent, to form a nickel-cobalt-manganese hydroxide (a composite metal salt compound) having a particle size of approximately 8.0 µm to 13.0 µm. In this case, the pH was controlled by adjusting the concentration and addition amount of NaOH and NH₃H₂O so as to ensure uniform crystal growth. The composite metal salt compound was dried at 80 °C for 12 hours, and then further dried at 110°C for 12 hours.

Subsequently, lithium hydroxide was added so that the ratio of the composite metal salt compound to lithium hydroxide was 1:1.05, and the mixture was uniformly stirred and mixed for 5 minutes. The mixture was placed in a calcination furnace and heated to 710 °C at a heating rate of 2 °C/min, and maintained at 710 °C for 10 hours. Oxygen was continuously supplied at a flow rate of 10 mL/min during the heating and holding. After the calcination was completed, the mixture was allowed to cool naturally to room temperature, followed by pulverization and classification. In this case, the mixture was pulverized using a ball mill with zirconia balls, and the large particles were obtained by adjusting the ball size and pulverization time.

### 2) Preparation of Small Particles

Small particles having a particle size greater than approximately 1.0 µm and less than 6.0 µm were obtained by performing the same process as the preparation of the large particles, except that the pH was controlled by adjusting the concentration and addition amount of NaOH and NH₃·H₂O during the preparation of nickel-cobalt-manganese hydroxide.

### Examples 2 to 9

Large particles and small particles were prepared in the same manner as in Example 1, except that the co-precipitation time was changed to 45 hours and the concentration and addition amount of NaOH and NH₃·H₂O were individually adjusted to satisfy the conditions of Table 1.

### Comparative Examples 1 to 8

Large particles and small particles were prepared in the same manner as in Example 1, except that the co-precipitation time was changed to 40 hours and the concentration and addition amount of NaOH and NH₃·H₂O were individually adjusted to satisfy the conditions of Table 1.

### 3) Measurement of Circularity

The circularity of the cathode active materials prepared in the examples and comparative examples was measured using a flow particle image analyzer (Morphologi 4 manufactured by Malvern). Specifically, 1 mm³ of the cathode active material samples prepared in the examples and comparative examples was dispersed under conditions of 4 bar and 10 ms, and then the large particles and the small particles of the examples and comparative examples were analyzed as two-dimensional images.

Subsequently, the circularity of 10,000 of the large particles and/or the small particles of the examples and comparative examples was measured.

The results of calculating the average circularity (C_{L}) of the large particles according to the examples and comparative examples, the ratio (C_{S}/C_{L}) of the average circularity (C_{S}) of the small particles to the average circularity (C_{L}) of the large particles, and the relative standard deviation of the circularity of the large particles are shown in Table 1 below.

**[TABLE 1]**

| Classification | Median particle diameter (D₅₀) of large particles | Median particle diameter (D₅₀) of small particles | Average circularity (C_{L}) of large particles | Ratio (C_{S}/C_{L}) of average circularity (C_{S}) of small particles to average circularity (C_{L}) of large particles | Relative standard deviation of circularity of large particles | Mixing ratio (weight ratio) of large particles to small particles |
|---|---|---|---|---|---|---|
| Example 1 | 11.6 | 3.9 | 0.99 | 0.93 | 2.5 | 75:25 |
| Example 2 | 11.5 | 3.6 | 0.99 | 0.93 | 2.5 | 60:40 |
| Example 3 | 11.5 | 3.5 | 0.98 | 0.95 | 2.7 | 75:25 |
| Example 4 | 11.5 | 3.6 | 0.99 | 0.92 | 2.6 | 75:25 |
| Example 5 | 11.6 | 3.9 | 0.98 | 0.94 | 3.3 | 75:25 |
| Example 6 | 13.0 | 4.2 | 0.96 | 0.97 | 3.5 | 75:25 |
| Example 7 | 13.2 | 3.8 | 0.97 | 0.90 | 3.1 | 75:25 |
| Example 8 | 13.1 | 3.9 | 0.98 | 0.97 | 4.5 | 75:25 |
| Example 9 | 13.2 | 3.8 | 0.96 | 0.98 | 4.6 | 75:25 |
| Comparative Example 1 | 14.7 | 4.2 | 0.97 | 1.03 | 2.6 | 75:25 |
| Comparative Example 2 | 11.8 | 3.5 | 0.95 | 1.00 | 3.5 | 75:25 |
| Comparative Example 3 | 13.0 | 3.7 | 0.90 | 1.02 | 2.7 | 75:25 |
| Comparative Example 4 | 11.5 | 3.5 | 0.88 | 1.10 | 5.2 | 75:25 |
| Comparative Example 5 | 13.5 | 3.6 | 0.96 | 0.93 | 9.8 | 75:25 |
| Comparative Example 6 | 13.0 | 4.3 | 0.90 | 0.97 | 2.7 | 75:25 |
| Comparative Example 7 | 13.5 | 3.5 | 0.95 | 1.05 | 9.8 | 75:25 |
| Comparative Example 8 | 11.5 | 4.3 | 0.88 | 0.98 | 5.2 | 75:25 |

### (2) Manufacture of Secondary Battery

Secondary batteries were manufactured using the cathode active materials of the examples and comparative examples shown in Table 1. Specifically, the cathode active material, Denka Black as a conductive material, and PVDF as a binder were mixed in a mass ratio of 98:1:1 to prepare a cathode mixture. The cathode mixture was then applied onto an aluminum current collector, followed by drying and roll-pressing at a pressure of 20 MPa to fabricate a cathode.

An anode slurry, which included 94% by weight ("wt%") of natural graphite as an anode active material, 3 wt% of flake-type graphite (KS6) as a conductive material, and 3 wt% of styrene-butadiene rubber (SBR) as a binder, was prepared. The anode slurry was coated onto a copper substrate, and then dried and roll-pressed to fabricate an anode.

The cathode and anode prepared as described above were each notched to a predetermined size and stacked, then an electrode cell was formed by interposing a separator (polyethylene, thickness: 25 µm) between the cathode and anode. Thereafter, tab parts of the cathode and the anode were welded, respectively. The assembly of the welded cathode/separator/anode was placed into a pouch, and three sides of the pouch were sealed, leaving one side open for electrolyte injection. At this time, the portion having the electrode tab was included in the sealed part. After injecting the electrolyte through the electrolyte injection side, the remaining electrolyte injection side was also sealed, and the cell was allowed to be impregnated for 12 hours or more.

A solution, prepared by dissolving a 1M LiPF₆ solution in a mixed solvent of EC/EMC/DEC (25/45/30; volume ratio), and further adding 1 wt% of fluoroethylene carbonate (FEC), 0.3 wt% of 1,3-propenesulfone (PRS), 0.5 wt% of propanesulfone (PS), and 0.5 wt% of ethylene sulfate (ESA), was used as the electrolyte.

### Experimental Example

### (1) Initial Discharge Capacity (mAh/g)

The prepared lithium secondary battery was charged (CC/CV, rate 0.1C, upper limit voltage 4.3 V, 0.05C cut-off) in a chamber at 25 °C, and the battery capacity (initial charge capacity) was measured. Then, the battery was discharged again (CC 0.1C, 3.0 V cut-off), and the battery capacity (initial discharge capacity) was measured.

### (2) Capacity Retention (%) at 25 °C

For the manufactured secondary battery, charging (CC/CV, 1.0C, 4.3 V, 0.05C cut-off) and discharging (CC, 1.0C, 3.0 V cut-off) at 25 °C were defined as one cycle, and the discharge capacity after the first cycle was measured.

The cycle was repeated 500 times, and the capacity retention at 25 °C was evaluated as a percentage of a value obtained by dividing the discharge capacity at the 500th cycle by the discharge capacity at the first cycle.

### (3) Capacity Retention (%) at 45 °C

For the manufactured secondary battery, charging (CC/CV, 1.0C, 4.3 V, 0.05C cut-off) and discharging (CC, 1.0C, 3.0 V cut-off) at 45 °C were defined as one cycle, and the discharge capacity after the first cycle was measured.

The cycle was repeated 500 times, and the capacity retention at 45 °C was evaluated as a percentage of a value obtained by dividing the discharge capacity at the 500th cycle by the discharge capacity at the first cycle.

### (4) Gas Generation (mL) at 45 °C

For the manufactured secondary battery, charging (CC/CV, 1.0C, 4.3 V, 0.05C cut-off) and discharging (CC, 1.0C, 3.0 V cut-off) at 45 °C were defined as one cycle, and the cycle was repeated 500 times. Thereafter, the battery was left at room temperature for 1 hour, and then placed in a chamber to measure the gas generation.

The inside of the chamber was evacuated, and then filled with nitrogen gas up to atmospheric pressure. In this case, a nitrogen volume (V₀) and an internal chamber pressure (P₀) were measured. After evacuating the inside of the chamber again, a hole was made in the battery to measure the internal chamber pressure (P1). Using Equation 2 below, the gas generation of the battery was measured from the measured values. [Equation 2] $Gas generation \left(mL\right) = {V}_{0} / {P}_{0} \times {P}_{1}$

The evaluation results are shown in Table 2 below.

**[TABLE 2]**

| | Initial discharge capacity (mAh/g) | Capacity retention (%) at 25 °C | Capacity retention (%) at 45 °C | Gas generation (mL) at 45 °C |
|---|---|---|---|---|
| Example 1 | 216.9 | 94 | 92 | 31.4 |
| Example 2 | 215.1 | 93.7 | 90.7 | 53.3 |
| Example 3 | 216.5 | 94.2 | 91.5 | 35.8 |
| Example 4 | 216.7 | 94.2 | 91.7 | 32.9 |
| Example 5 | 216.5 | 93.2 | 92.0 | 36.1 |
| Example 6 | 218.7 | 92.5 | 90.2 | 43.1 |
| Example 7 | 218.9 | 92.3 | 90 | 45.5 |
| Example 8 | 218.9 | 91.9 | 90.6 | 44.0 |
| Example 9 | 218.6 | 91.0 | 91.2 | 46.9 |
| Comparative Example 1 | 216.2 | 93 | 90.1 | 98.3 |
| Comparative Example 2 | 217.2 | 92.7 | 89.5 | 85.8 |
| Comparative Example 3 | 220.2 | 90.1 | 89.4 | 83.1 |
| Comparative Example 4 | 220.1 | 85.4 | 88 | 109.6 |
| Comparative Example 5 | 213.8 | 84.3 | 81.0 | 57.8 |
| Comparative Example 6 | 219.7 | 86.7 | 85.1 | 88.1 |
| Comparative Example 7 | 213.8 | 84.8 | 80.7 | 59.2 |
| Comparative Example 8 | 217.9 | 85.9 | 87.5 | 95.5 |

Referring to Tables 1 and 2 above, in the case of the examples satisfying all of the following conditions, including an average circularity (C_{L}) of large particles of 0.95 or more and less than 1, a ratio (C_{S}/C_{L}) of the average circularity (C_{S}) of small particles to the average circularity (C_{L}) of large particles of 0.90 to 0.99, and a relative standard deviation of the circularity of the large particles of 1 to 5, the capacity retention was overall high and the gas generation was low.

On the other hand, for the comparative examples that did not satisfy at least one of the above ranges, the capacity retention was overall lower and the gas generation was higher than that of the examples.

### [Description of Reference Numerals]

100: Cathode
105: Cathode current collector
107: Cathode lead
110: Cathode active material layer
120: Anode active material layer
125: Anode current collector
127: Anode lead
130: Anode
140: Separator
150: Electrode assembly
160: Case

## Claims

1. A cathode active material for a lithium secondary battery comprising:
large particles; and
small particles having a median particle diameter (D₅₀) smaller than that of the large particles,
wherein the large particles have an average circularity (C_{L}) of 0.95 or more and less than 1,
a ratio (C_{S}/C_{L}) of an average circularity (C_{S}) of the small particles to the average circularity (C_{L}) of the large particles is 0.90 to 0.99,
a relative standard deviation of the circularity of the large particles is 1 to 5, and
the circularity is defined by Equation 1 below: [Equation 1] $Circularity = 4 π \times \left({A / P}^{2}\right)$ (in Equation 1, A denotes the area of a particle cross-section, and P denotes the length of a perimeter of the particle cross-section).

2. The cathode active material for a lithium secondary battery according to claim 1, wherein the large particles and the small particles comprise lithium-nickel metal oxide particles.

3. The cathode active material for a lithium secondary battery according to claim 2, wherein the lithium-nickel metal oxide particles are represented by Formula 1 below:
[Formula 1] LiₓNiₐM_{b}O_{2+z}
(in Formula 1, M is at least one element selected from the group consisting of B, Al, Si, Ti, V, Cr, Mg, Mn, Fe, Co, Cu, Zn, Y, Nb, Zr, Mo, Sn, Sr and W, and 0.9≤x≤1.2, 0.6≤a≤0.99, 0.01≤b≤0.4, and -0.5≤z≤0.1).

4. The cathode active material for a lithium secondary battery according to claim 3, wherein in Formula 1, a satisfies 0.8≤a≤0.95.

5. The cathode active material for a lithium secondary battery according to any one of claims 1 to 4, wherein the large particles have a median particle diameter (D₅₀) of greater than 10.0 µm and less than 15.0 µm.

6. The cathode active material for a lithium secondary battery according to any one of claims 1 to 5, wherein the small particles have a median particle diameter (D₅₀) of greater than 1.0 µm and less than 8.0 µm.

7. The cathode active material for a lithium secondary battery according to any one of claims 1 to 6, wherein the large particles have an average circularity (C_{L}) of 0.97 or more and less than 1.

8. The cathode active material for a lithium secondary battery according to any one of claims 1 to 7, wherein the large particles have an average circularity (C_{L}) of 0.99 or more and less than 1.

9. The cathode active material for a lithium secondary battery according to any one of claims 1 to 8, wherein the ratio (C_{S}/C_{L}) of the average circularity (C_{S}) of the small particles to the average circularity (C_{L}) of the large particles is 0.92 to 0.97.

10. The cathode active material for a lithium secondary battery according to any one of claims 1 to 9, wherein the ratio (C_{S}/C_{L}) of the average circularity (C_{S}) of the small particles to the average circularity (C_{L}) of the large particles is 0.93 to 0.96.

11. The cathode active material for a lithium secondary battery according to any one of claims 1 to 10, wherein the relative standard deviation of the circularity of the large particles is 1 to 4.

12. The cathode active material for a lithium secondary battery according to any one of claims 1 to 11, wherein the relative standard deviation of the circularity of the large particles is 1 to 3.

13. The cathode active material for a lithium secondary battery according to any one of claims 1 to 12, wherein a weight ratio of the large particles to the small particles is 6:4 to 9:1.

14. A cathode for a lithium secondary battery comprising:
a cathode current collector; and
a cathode active material layer formed on the cathode current collector and comprising the cathode active material for a lithium secondary battery of any one of claims 1 to 13.

15. A lithium secondary battery comprising:
the cathode for a lithium secondary battery of claim 14;
an anode disposed opposite the cathode; and
a separator interposed between the cathode and the anode.
